# FASCICULE DE BREVET EUROPEEN

(11) **EP 0 688 032 B1**
(45) Date de publication et mention de la délivrance du brevet: **07.01.1998**
(21) Numéro de dépôt: 95401398.3
(22) Date de dépôt: 15.06.1995
(51) Int. Cl.: H01H 9/02, B60Q 1/14, H01H 1/40

(54) **Système de commutation sous volant pour véhicules automobiles**
Unter dem Lenkrad angebrachtes Schaltsystem für Kraftfahrzeuge
Switching system for mounting under the steering-wheel of an automobile

(30) Priorité: 15.06.1994 FR 9407302
(43) Date de publication de la demande: 20.12.1995
(73) Titulaire: MAGNETI MARELLI FRANCE, 92000 Nanterre (FR)
(72) Inventeur: Rollet, Gérard, F-14000 Caen (FR); Gauthier, Christian, F-92200 Neuilly s/Seine (FR); Lambertz, Nicolas, F-14000 Caen (FR); Gomes, Michel, F-14830 Langrune s/Mer (FR)
(74) Mandataire: Texier, Christian

(56) Documents cités:
- DE-A- 2 810 790
- DE-A- 3 532 532
- DE-C- 3 433 451
- US-A- 4 404 438

## Description

La présente invention concerne le domaine des commutateurs électriques pour véhicules automobiles.

Plus précisément, la présente invention concerne un système de commutation sous volant selon le préambule de la revendication 1 (voir par example EP-A-489654). Les systèmes de commutation sous volant sont des systèmes placés sur la partie supérieure de la colonne de direction des véhicules, sous le volant.

De nombreux systèmes de commutateurs électriques ont été proposés à cet effet.

Généralement les systèmes de commutation sous volant comprennent :
- une embase support fixée par vissage sur le haut de la colonne de direction,
- différents ensembles de commutation fixés par vissage sur l'embase support,
- une coquille inférieure fixée par vissage sur l'embase support pour recouvrir au moins partiellement les ensembles de commutation, tout en laissant accessible leur manette d'actionnement, et
- une coquille supérieure fixée également sur l'embase support par vissage, et complémentaire de la coquille inférieure, pour achever l'habillage des ensembles de commutation.

Ces ensembles de commutation sont le plus souvent utilisés pour commander des moyens d'éclairage et des indicateurs lumineux, notamment les indicateurs de changement de direction. Ils sont également utilisés pour commander les essuies/lave-glaces, indicateurs sonores, voire des éléments périphériques auxiliaires, tels qu'auto-radio, climatisation, etc ...

Les commutateurs électriques sous volant connus ont déjà rendu de grands services.

Cependant, ces systèmes s'avèrent complexes, quant à leur structure, et surtout quant à leur mode d'assemblage.

Il en résulte que le temps d'intervention pour tout montage ou démontage de ces ensembles de commutation est très long, généralement de plusieurs heures, quel que soit le stade de l'intervention, c'est-à-dire au niveau de la fabrication d'un véhicule neuf, d'un changement sous garantie, ou encore d'un remplacement ultérieur.

De nombreuses tentatives de simplification ont été envisagées.

Par exemple, le document EP-A-489654 décrit un ensemble de commutation pour véhicules automobiles dans lequel les contacts électriques de sortie d'au moins un commutateur électrique sont solidaires d'une platine conçue pour être fixée sur la partie supérieure d'une colonne de direction. Plus précisément, ce document décrit un ensemble de commutation comprenant une platine réalisée par surmoulage d'un corps en matériau thermoplastique sur au moins un réseau de lames en matériau électriquement conducteur. De préférence, une coquille est assemblée, par exemple par encliquetage, vissage, rivetage ou collage sur la platine précitée. Cette coquille loge des organes de commutation coopérant avec les lames précitées intégrées à la platine.

La structure décrite dans ce document EP-A-489654 permet certes de simplifier la structure de commutation par rapport aux systèmes antérieurs connus.

Cependant, les moyens décrits dans ce document ne permettent pas de simplifier notablement le processus de montage/démontage sur la colonne de direction.

En effet, ces moyens exigent pour accéder à l'ensemble de commutation, de démonter le volant ainsi que les divers accessoires portés par celui-ci, tels que par exemple les coussins de sécurité gonflables. Ces moyens exigent également le démontage des coquilles d'habillage.

Les documents US-A-4404438, DE-A-2810790, DE-A-3532532 et DE-C-3433451 décrivent des systèmes de commutation comprenant une embase support adaptée pour être fixée sur la partie supérieure d'une colonne de direction et au moins un ensemble de commutation modulaire qui loge des moyens de liaisons électriques et des moyens de commande mécaniques et qui est adapté pour être engagé sur l'embase support selon une direction générale perpendiculaire à l'axe de la colonne et être fixé sur cette embase support.

Cependant ces moyens imposent de remplacer globalement l'ensemble de commutation modulaire en cas de déficience, et ne permettent pas par exemple de remplacer uniquement les moyens de commande mécaniques, parfois sujets à usure, en conservant les moyens de liaison électrique.

La présente invention a maintenant pour but de perfectionner les systèmes de commutation sous volant connus.

Ce but est atteint selon la présente invention grâce à un système de commutation sous volant pour véhicules automobiles du type connu comprenant une embase support réalisée par surmoulage en matière plastique sur des jeux de lames en matériau électriquement conducteur, et adaptée pour être fixée sur la partie supérieure d'une colonne de direction et au moins un ensemble de commutation modulaire adapté pour être fixé sur l'embase et comportant des organes de commutation aptes à coopérer avec les lames précitées intégrées à l'embase support, caractérisé par le fait que l'embase support et l'ensemble de commutation modulaire comprennent des moyens de fixation complémentaires adaptés pour permettre l'engagement de l'ensemble de commutation modulaire sur l'embase selon une direction générale perpendiculaire à l'axe de la colonne, puis pivotement de l'ensemble de commutation modulaire par rapport à l'embase support autour d'un axe perpendiculaire à l'axe de la colonne de direction pour porter en prise les organes de commutation de l'ensemble de commutation modulaire et les lames intégrées à l'embase support.

Selon une autre caractéristique avantageuse de la présente invention, les moyens de fixation complémentaires précités sont adaptés pour permettre l'engagement des ensembles de commutation modulaires sur l'embase selon une direction inclinée d'un angle de l'ordre de 0 à 15°, très avantageusement de l'ordre de 3 à 5° par rapport à un plan perpendiculaire à l'axe de la colonne de direction.

Selon une autre caractéristique avantageuse de la présente invention, les moyens de fixation complémentaires comprennent :
- des premiers moyens conçus pour immobiliser les ensembles de commutation sans jeu dans une direction parallèle à l'axe de la colonne de direction,
- des seconds moyens conçus pour immobiliser les ensembles de commutation sans jeu dans une direction orthogonale à l'axe de la colonne de direction, et
- des troisièmes moyens conçus pour assurer l'immobilisation par encliquetage des ensembles de commutation.

D'autres caractéristiques, buts et avantages de la présente invention apparaîtront à la lecture de la description détaillée qui va suivre et au regard des dessins annexés donnés à titre d'exemple non limitatif et sur lesquels :
- la figure 1 représente une vue en perspective d'une embase support conforme à la présente invention,
- les figures 2 et 3 représentent des vues respectives de deux jeux de lames en matériau électriquement conducteur avant surmoulage de l'embase support sur celles-ci,
- la figure 4 représente une vue en bout axiale de moyens de fixation prévus en partie supérieure d'une colonne de direction,
- la figure 5 représente une vue latérale des moyens de fixation selon l'orientation représentée V sur la figure 4,
- les figures 6, 7 et 8 représentent schématiquement trois étapes de fabrication de l'embase support conforme à la présente invention correspondant respectivement à la soudure de fils électriques sur des lames, au surmoulage de l'embase support, et à la séparation ultérieure de lames électriques conductrices,

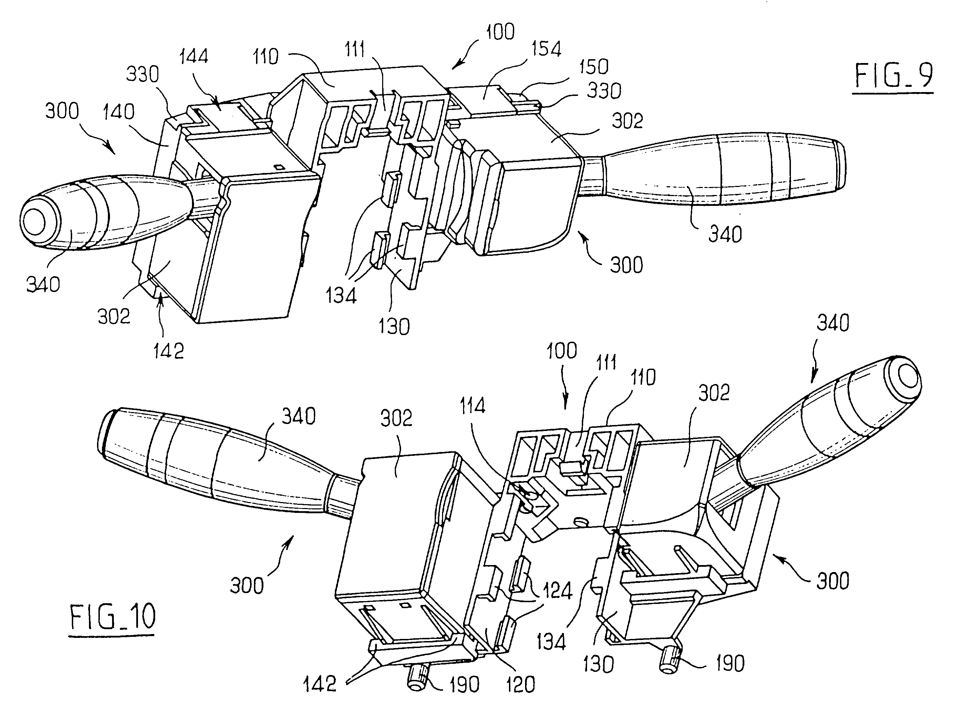

- les figures 9, 10, 11 et 12 représentent quatre vues en perspective d'un système de commutation conforme à la présente invention, et
- les figures 13 et 14 représentent deux vues en perspective d'un ensemble de commutation destiné à être intégré dans ce système.

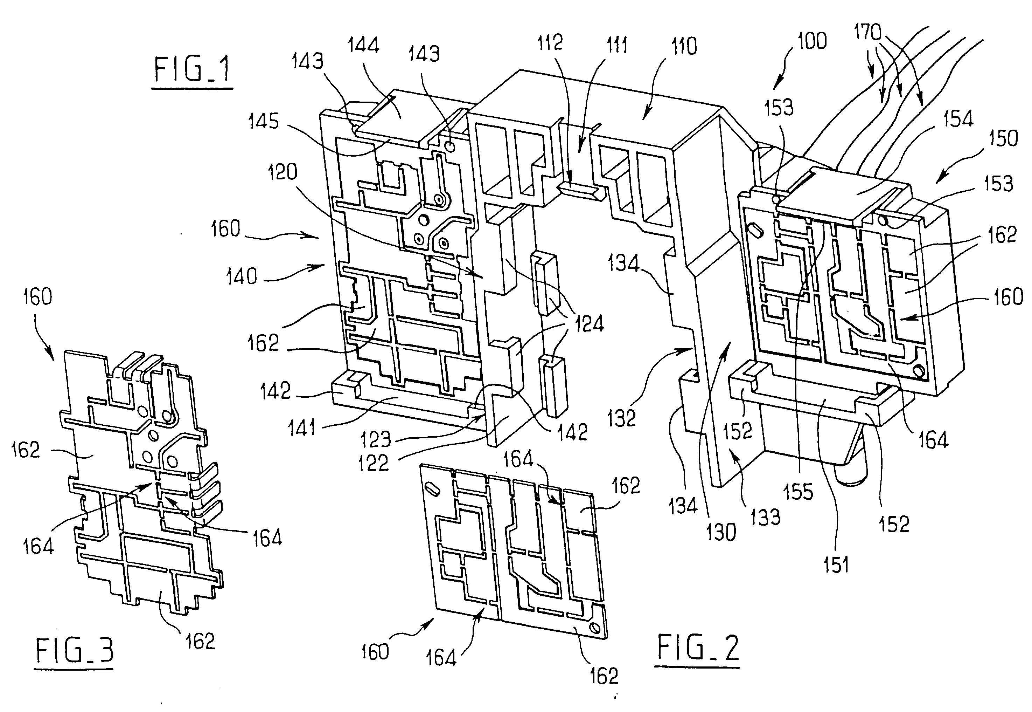

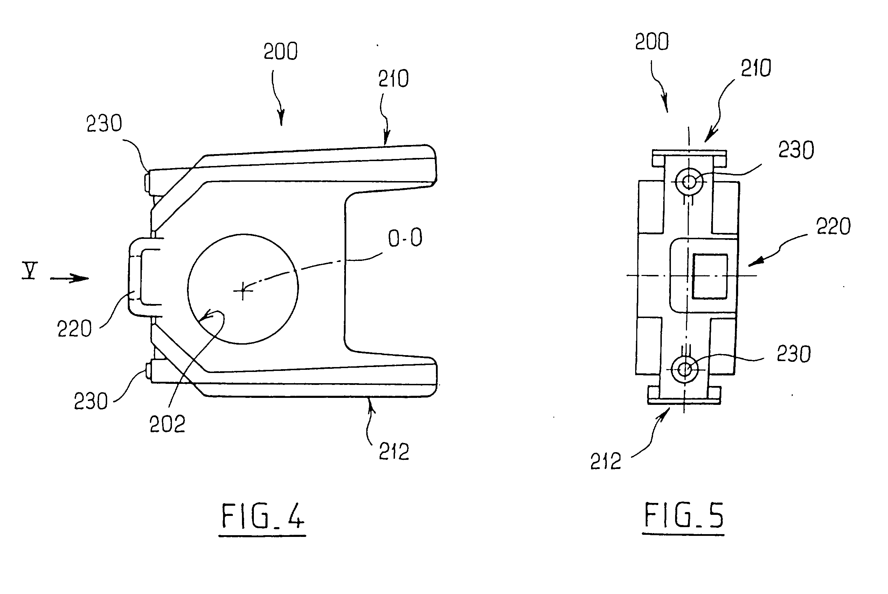

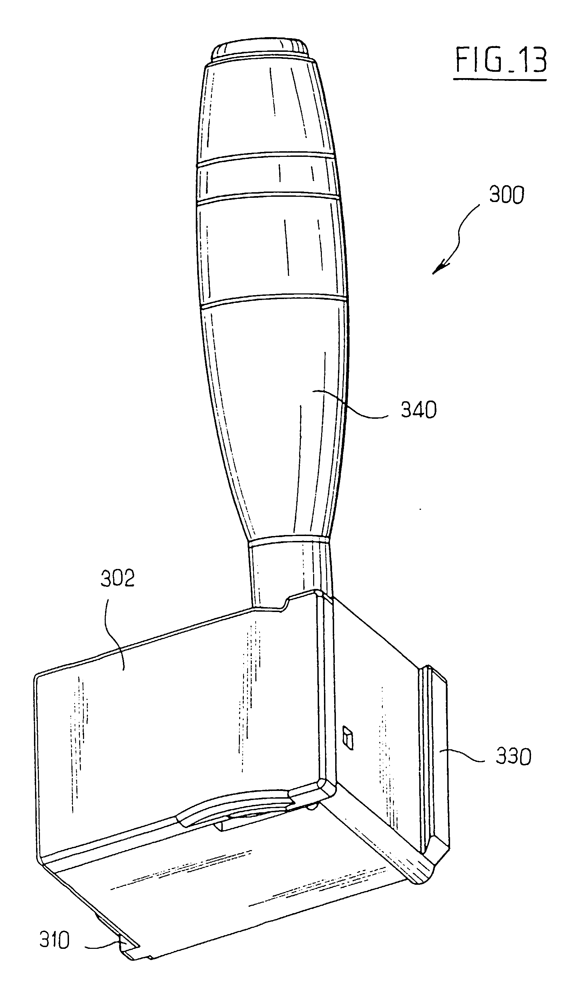

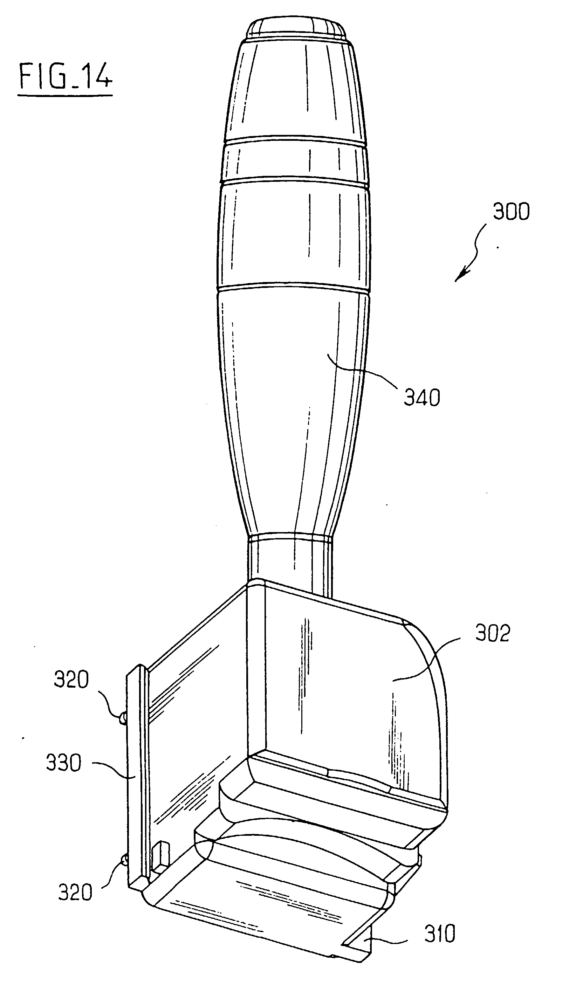

Comme on l'a exposé précédemment, le système de commutation conforme à la présente invention comprend essentiellement une embase support 100 représentée sur la figure 1, adaptée pour être fixée sur des moyens de fixation 200 représentés sur les figures 4 et 5, prévus en partie supérieure d'une colonne de direction, et au moins un ensemble de commutation 300, représenté sur les figures 13 et 14 adapté pour être fixé sur l'embase support 100 par engagement dans une direction générale orthogonale à l'axe de la colonne de direction.

L'embase support 100 est avantageusement réalisée par moulage en matière plastique. L'embase support 100 possède une forme générale en arche ou U, afin d'être engagée sur la partie supérieure de la colonne de direction, latéralement, c'est-à-dire par déplacement perpendiculairement à l'axe de la colonne de direction.

Plus précisément, l'embase support 100 comprend une âme 110 et deux ailes 120, 130 généralement parallèles entre elles et orthogonales à l'âme 110. Les ailes 120,130 possèdent des faces internes en regard 122, 132 parallèles à l'axe de la colonne de direction. Ces faces 122, 132 sont avantageusement légèrement divergentes en éloignement de l'âme 110, pour faciliter l'engagement de cette embase support 100 sur les moyens complémentaires de fixatin 200 prévus en partie supérieure de la colonne de direction.

Chaque aile 120, 130 est munie sur sa surface extérieure 123, 133 d'une paroi 140, 150 généralement plane qui s'étend perpendiculairement à l'axe de la colonne de direction.

L'âme 110 et les deux ailes 120, 130 sont munies de moyens 111, 124, 134 adaptés pour permettre un assemblage rapide de l'embase support sur les moyens de fixation 200 prévus en partie supérieure de la colonne de direction.

Selon le mode de réalisation préférentiel représenté sur les figures annexées, les moyens prévus à cet effet sur l'embase support 100 et en partie supérieure de la colonne de direction comprennent d'une part, une structure de guidage dans une direction perpendiculaire à l'axe de la colonne de direction, et d'autre part des moyens de verrouillage en position d'assemblage.

La structure de guidage peut faire l'objet de nombreuses variantes de réalisation. Selon le mode de réalisation particulier et non limitatif représenté sur les figures annexées, cette structure de guidage est prévue sur les ailes 120, 130 de l'embase support 100.

Plus précisément, cette structure de guidage est formée de saillies en porte à faux 124, 134 prévues sur les surfaces internes 122, 132 des ailes 120, 130, ou de rainures à bords convergents prévus sur les mêmes surfaces internes, dans une direction orthogonale à l'axe de la colonne de direction. Ces saillies en porte à faux 124, 134 ou rainures à bords convergents équivalents, sont adaptées pour être engagées sur des nervures complémentaires 210, 212 prévues au niveau des moyens de fixation 200 en partie supérieure de la colonne de direction. Ces nervures 210, 212 sont évasées comme on le voit sur la figure 5. Elles sont complémentaires des structures 124, 134 prévues sur l'embase support 100 et s'étendent dans une direction perpendiculaire à l'axe de la colonne de direction. Elles présentent avantageusement la même divergence que les faces 122, 132 précitées.

Les moyens de verrouillage peuvent également faire l'objet de nombreuses variantes de réalisation. Selon le mode de réalisation préférentiel représenté sur les figures annexées, ils sont formés d'une lame élastique 111 pourvue d'une denture 112 à son extrémité, liée à l'âme 110 de l'embase support 100, dans une direction générale perpendiculaire à l'axe de la colonne de direction. La denture 112 est adaptée pour s'encliqueter dans un arceau complémentaire 220 prévue au niveau des moyens de fixation 200 en partie supérieure de la colonne de direction, lorsque l'embase support 100 atteint sa position d'assemblage, après engagement des guides 124, 134 sur les nervures 210, 212.

La coopération définie entre les guides 124, 134 et les nervures 210, 212 assure une immobilisation relative entre l'embase support 100 et les moyens 200 prévus en partie supérieure de la colonne de direction, dans une direction parallèle à l'axe de cette colonne. Le cas échéant, pour supprimer tout jeu transversalement à cet axe de la colonne de direction, on peut prévoir des moyens élastiques, de préférence imperdables, logés dans des compartiments 114 formés par exemple sur l'âme 110, radialement par rapport à l'axe de la colonne de préférence désaxés et débouchant sur celle-ci, c'est-à-dire dans l'espace inter du U formé par l'embase 100, pour reposer sur la colonne.

De préférence, l'embase support 100 est réalisée d'une seule pièce par surmoulage sur au moins un jeu de lames 160 en matériau électriquement conducteur.

Selon le mode de réalisation particulier et non limitatif représenté sur les figures annexées, le système de commutation comprend deux ensembles commutateurs 300 placés respectivement sur l'extérieur de chaque aile 120,130, soit sur les parois 140, 150.

Chaque ensemble commutateur 300 comprend des organes de commutation adaptés pour coopérer avec les lames précitées 160 pour modifier l'état de liaison électrique de celles-ci. Ces organes de commutation comprennent de préférence des moyens de liaison sélective des lames 160 et des moyens mécaniques de commande de ces moyens de liaison sélective.

De ce fait, l'embase support 100 est surmoulée sur deux jeux de lames 160.

De façon connue en soi, ces lames sont réalisées en cuivre ou laiton. Elles possèdent par exemple une épaisseur de l'ordre de 8/10mm.

De façon également connue en soi, pour faciliter la mise en place des lames 160 dans le moule conçu pour la réalisation de l'embase support 100, les différentes lames 162 de chaque jeu 160, bien que prédéfinies, sont néanmoins initialement reliées par des pontets localisés, de faible largeur et aisément sécables référencés 164 sur les figures 2 et 3 annexées. Ces pontets 164 sont rompus après réalisation de l'embase support 100 par surmoulage, c'est-à-dire lorsque les différentes lames 162 sont correctement positionnées et immobilisées.

Bien entendu, le surmoulage de l'embase support 100 ne doit pas enrober totalement les lames 162. Ce surmoulage doit préserver l'une des deux faces de ces lames de sorte que des moyens de liaison électriquement conducteurs intégrés de façon connue en soi aux ensembles de commutation 300, formés par exemple de plots ou de cavaliers puissent modifier l'état de liaison des lames 162.

Les jeux de lames 160 peuvent faire l'objet de nombreuses variantes, quant à leur géométrie, selon les fonctions de commutation concernées. Pour ces raisons,les jeux de lames 160 représentés sur les figures 2 et 3 ne seront pas décrites plus en détail par la suite.

Des moyens doivent bien entendu être prévus pour assurer une liaison électrique de ces lames 162 avec les organes périphériques du véhicule, par exemple les indicateurs sonores, les moyens d'éclairage, les indicateurs lumineux, etc...

Pour cela on peut prévoir des prolongements, sur certaines lames 162 au moins, accessibles au niveau d'un connecteur sur l'embase support 100.

Cependant, de préférence, selon l'invention ces moyens de liaison sont formés de fils électriques 170 soudés sur la face arrière 163 des lames 162, c'est-à-dire la face de ces lames 162 dirigée vers la masse de matière plastique formant l'embase support 100. Plus précisément, ces fils 170 sont soudés sur la face arrière des lames 162 avant réalisation de l'embase support 100 par surmoulage. Il s'agit bien entendu de fils 170 comprenant une âme électriquement conductrice 172 placée dans une gaine 174 électriquement isolante.

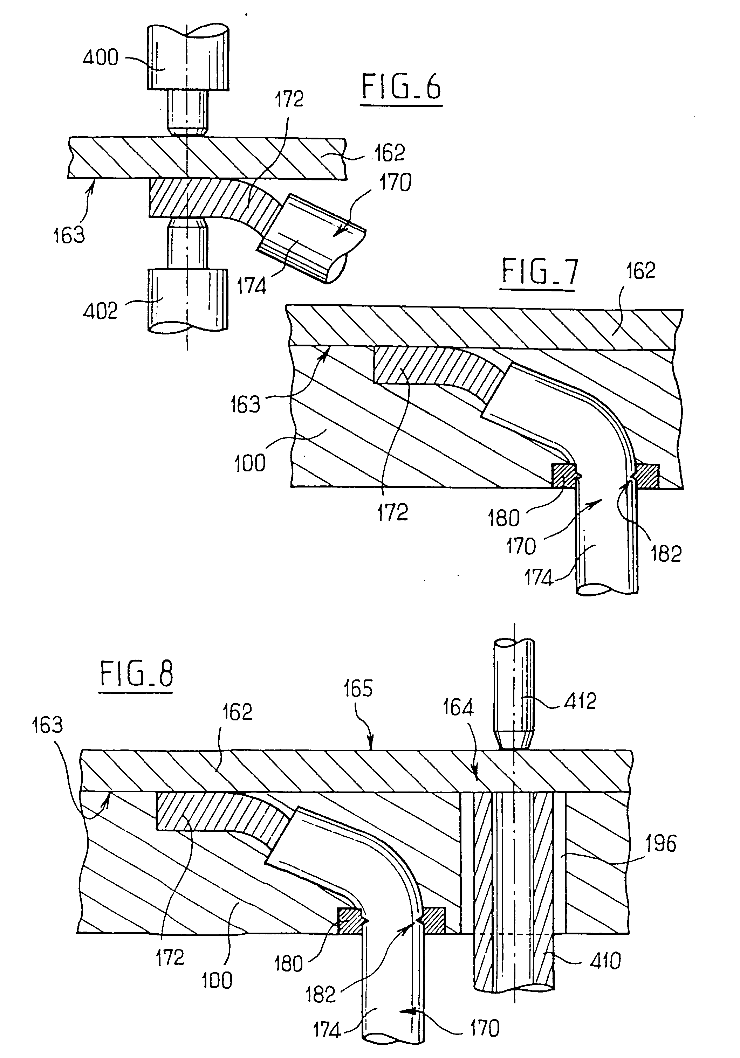

On aperçoit sur la figure 6, deux électrodes 400, 402 de soudure d'une âme 172 électriquement conductrice d'un tel fil 170 sur une lame 162.

On a schématisé sur la figure 7 l'étape de surmoulage du corps en matière plastique formant l'embase support 100 sur un tel ensemble lame 162, fil 170. On comprend que le fil 170 soudé sur la face arrière 163 de la lame 162 participe à l'immobilisation de cette dernière, même si ladite lame 162 n'est pas totalement enrobée dans la masse de l'embase support 100.

De préférence, selon l'invention, avant d'opérer le surmoulage de l'embase support 100, chaque fil 170 est muni, sur sa gaine isolante 174 d'une bague ou manchon 180, par exemple de matière plastique, de dimensions calibrées avec précision. La bague ou manchon 180 est placée au niveau de la face du moule par laquelle émergent les fils 170. Elle a pour fonction d'éviter toute fuite de matière plastique à ce niveau. Elle permet également d'éviter l'arrachement des fils 170, en absorbant les contraintes mécaniques appliquées lors du moulage et ultérieurement. A cet effet, de préférence, la bague ou manchon 180 est ancrée légèrement dans la gaine isolante 174, par tout moyen approprié, par exemple à l'aide d'une denture annulaire interne 182 schématisée sur la figure 7.

En outre, de préférence, lors du surmoulage de l'embase 100, on veille à préserver, grâce à des formes complémentaires prévues dans le moule, des puits 196 dans la masse de l'embase support 100. Ces puits 196 s'étendent de préférence sur toute l'épaisseur de l'embase support 100, jusqu'à la face arrière 163 des lames 162. Ces puits 196 sont formés en regard des pontets 164 sécables reliant initialement deux lames 162 à séparer. Ils permettent d'engager un contrepoinçon 410 contre la face arrière 163 du pontet 164 pour garantir un sectionnement net du pontet 164, sans bavure ni copeau entre le contrepoinçon 410 précité et un poinçon complémentaire 412 placé sur la face avant 165 des pontets 164.

Sur la figure 1, on a schématisé différents fils 170 émergeant de l'embase support 100. Le cas échéant, ces fils 170 peuvent être regroupés dans une gaine commune, par exemple une gaine rétractable.

On va maintenant décrire les moyens de fixation sur l'embase support 100 pour recevoir les ensembles de commutation 300.

Comme on l'a évoqué précédemment, ces moyens se décomposent de préférence en premiers moyens 142, 152 conçus pour immobiliser les ensembles de commutation 300 sans jeu dans une direction parallèle à l'axe de la colonne de direction, des seconds moyens 143, 153 conçus pour immobiliser les ensembles de commutation sans jeu dans une direction perpendiculaire à l'axe de la colonne de direction et des troisièmes moyens 144, 154 d'immobilisation par encliquetage de ces ensembles de commutation 300.

Selon le mode de réalisation particulier représenté sur les figures annexées, ces premiers moyens 142, 152 sont formés sur des murets 141, 151 formés à la base des parois 140, 150, c'est-à-dire l'extrémité de ces parois adjacentes à l'extrémité libre des ailes 120, 130 opposées à l'âme 110. Ces murets 141, 151 sont généralement parallèles à un plan passant par l'axe de la colonne de direction.

Plus précisément, les premiers moyens précités 142, 152 sont formés de structures en porte à faux sur la face interne des murets 141, 151 précités. En d'autres termes, ces structures en porte à faux 142, 152 font saillie en direction de l'âme 110.

La distance séparant ces structures en porte à faux 142, 152 est égale à l'épaisseur d'une nervure 310 prévue sur le boîtier de l'ensemble de commutation 300 associé. On comprend ainsi que lorsque la nervure 310 d'un ensemble de commutation 300 est engagé sur ces moyens 142, 152, tout jeu relatif est interdit entre l'ensemble de commutation 300 et l'embase support 100 parallèlement à l'axe de la colonne de direction. Ces moyens 142, 152 assurent également un préguidage des modules 300 lors de leur montage sur l'embase support 100.

Les seconds moyens 143, 153 précités peuvent faire l'objet de nombreuses variantes.

Selon le mode de réalisation préférentiel représenté sur les figures annexées, ces moyens 143, 153 sont formés de deux alésages calibrés formés dans les parois 140, 150 et destinés à recevoir des pions calibrés complémentaires 320 prévus également sur le boîtier 302 de l'ensemble de commutation 300 associé.

Plus précisément de préférence, ces alésages 143, 153 sont prévus sur les parois 140, 150 à proximité de l'âme 110. Les axes de ces alésages 143, 153 sont avantageusement contenus dans un plan parallèle à l'axe de la colonne de direction.

Enfin, les troisièmes moyens sont formés selon le mode de réalisation représenté sur les figures annexées d'une languette 144, 154 pourvue d'une denture 145, 155 à son extrémité, laquelle denture 145, 155 est conçue pour immobiliser par encliquetage une seconde nervure 330 prévue sur le boîtier 302 de l'ensemble de commutation 300 associé. La languette 144, 154 s'étend généralement parallèlement à l'axe de la colonne de direction. Elle est formée sur le bord des parois 140, 150 opposées aux murets 141, 151, soit sensiblement adjacentes à l'âme 110. De même, on notera que la seconde nervure 330 est placée sur une face du boîtier 302 de l'ensemble de commutation 300 opposée à la nervure 310 précitée.

La languette 144, 154 et/ou la denture 145, 155 est/sont adapté(s) pour permettre un démontage rapide.

Les ensembles de commutation 300 ne seront pas décrits dans le détail par la suite. Ils peuvent être formés de toute structure connue de l'homme de l'art commandées par exemple par une manette de commutation 340 montée à pivotement dans deux plans perpendiculaires, et logeant dans le boîtier 302 des moyens électriquement conducteurs (par exemple plots ou cavailiers) adaptés pour permettre de modifier l'état de liaison électrique entre les lames 162.

L'homme de l'art comprendra aisément que la structure du système qui vient d'être décrit permet d'engager les ensembles de commutation 300 sur l'embase support 100 selon une direction générale perpendiculaire à l'axe de la colonne de direction, avantageusement par translation selon une direction inclinée de l'ordre de 0 à 15°, très avantageusement de l'ordre de 3 à 5° par rapport à un plan perpendiculaire à cet axe.

Sur la figure 4, cet axe de la colonne de direction est référencé 0-0. Par ailleurs sur la même figure 4, le passage pour l'arbre de direction est référencé 202.

Plus précisément la présente invention permet de fixer les ensembles de commutation 300 sur l'embase support 100 par engagement des ensembles 300 selon une direction générale perpendiculaire à l'axe O-O de la colonne pour placer la nervure 310 sous les structures en porte à faux 142, 152, suivi d'un pivotement de l'ensemble de commutation modulaire 300 par rapport à l'embase support autour d'un axe perpendiculaire à l'axe O-O de la colonne de direction, matérialisé par les structures 142, 152, pour porter en prise les organes de commutation de l'ensemble de commutation modulaire et les lames intégrées à l'embase support, et assurer la fixation de l'ensemble de commutation modulaire 300 par encliquetage grâce aux moyens 144, 154.

Ce mouvement combiné de translation/pivotement permet d'éviter tout risque de détérioration des lames intégrées dans l'embase support 100 et des organes de commutation de l'ensemble modulaire de commutation 300.

La structure conforme à la présente invention permet par conséquent de démonter/remonter à volonté les ensembles de commutation 300 ou même l'embase support 100, sans exiger le retrait préalable du volant et des moyens qui lui sont liés, tels que coussin de sécurité gonflable.

Pour retirer les ensembles de commutation 300 il suffit en effet de déclipser les languettes 144, 154.

Pour retirer l'embase support 100 il suffit en effet de déclipser la languette 111.

Bien entendu la présente invention n'est pas limitée au mode de réalisation particulier qui vient d'être décrit, mais s'étend à toutes variantes conformes à son esprit.

Ainsi par exemple, on peut prévoir sur l'embase support 100 des moyens 190 adaptés pour assurer le centrage d'une coquille d'habillage. Sur les figures annexées on aperçoit à cet effet, deux pions de centrage 190 en saillie parallèlement à l'axe O-O de la colonne de direction, respectivement sur les bases des parois 140, 150.

On peut également prévoir, par exemple sur la surface interne de l'âme 110 des pions ou alésages 192 conçus pour venir en engagement sur des alésages ou pions complémentaires 230 prévus sur les moyens 200 en partie supérieure de la colonne de direction pour permettre de tenir les couples d'entraînement générés lors de l'actionnement des manettes 340.

Ces moyens 192, 230 sont de préférence non symétriques, pour servir de détrompeur et imposer de ce fait une position relative univoque entre l'embase support 100 et les moyens 200.

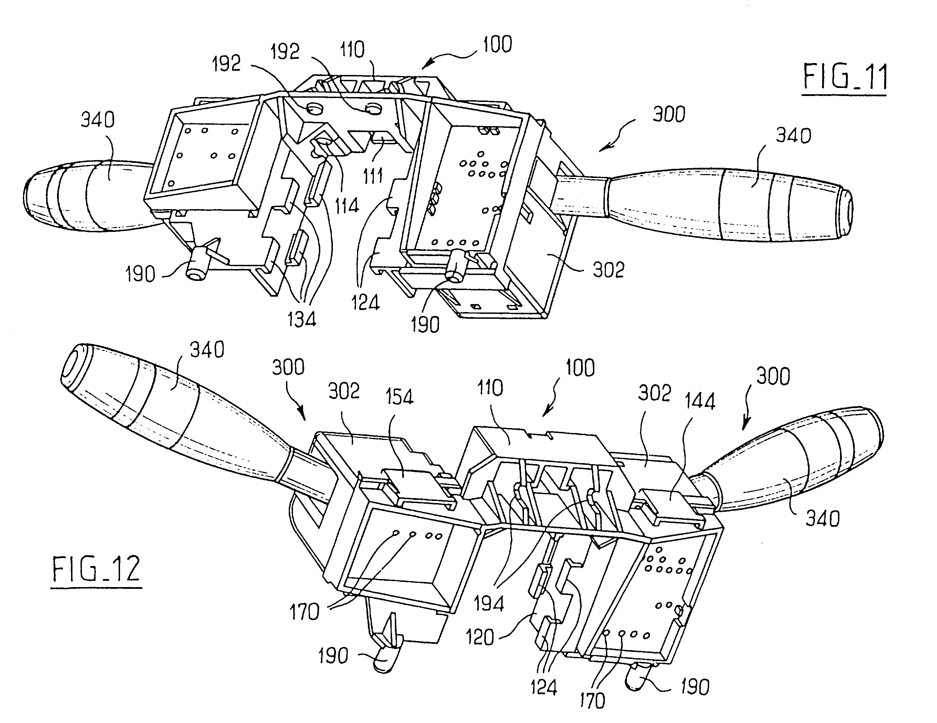

On peut également prévoir sur l'embase support 100, par exemple sur l'âme 110 des cloisons comportant des passages 194 de maintien de cable comme on le voit sur la figure 12.

On peut également prévoir d'adapter les ensembles de commutation 300 pour recevoir eux-mêmes par encliquetage et engagement dans une direction générale perpendiculaire à l'axe de la colonne de direction des modules de commutation additionnels.

Enfin, l'embase support peut être adaptée pour recevoir des moyens auxiliaires tels que par exemple des capteurs d'angle, ou encore des contacteurs tournants. Ces derniers sont alors avantageusement assemblés sur l'embase support 100 ou sur les moyens 200 prévus en partie supérieure de la colonne de direction, par montage à baïonnette.

Ces contacteurs tournants sont bien connus de l'homme de l'art. Ils ne seront donc pas décrits dans le détail par la suite. Généralement ces contacteurs tournants comprennent un organe électriquement conducteur multi-pistes souple relié entre d'une part le volant rotatif, et d'autre part un élément fixe lié à la colonne de direction.

## Revendications

1. Système de commutation sous volant pour véhicules automobiles du type connu comprenant une embase support (100) réalisée par surmoulage en matière plastique sur des jeux de lames (160) en matériau électriquement conducteur et adaptée pour être fixée sur la partie supérieure d'une colonne de direction et au moins un ensemble de commutation modulaire (300) adapté pour être fixé sur l'embase (100) et comportant des organes de commutation aptes à coopérer avec les lames (160) intégrées à l'embase support (100), caractérisé par le fait que l'embase support (100) et l'ensemble de commutation modulaire (300) comprennent des moyens de fixation complémentaires (142, 152, 143, 153, 144, 154; 310, 320, 330) adaptés pour permettre l'engagement de l'ensemble de commutation modulaire (300) sur l'embase (100) selon une direction générale perpendiculaire à l'axe (O-O) de la colonne puis pivotement de l'ensemble de commutation modulaire (300) par rapport à l'embase support (100) autour d'un axe perpendiculaire à l'axe (O-O) de la colonne de direction pour porter en prise les organes de commutation de l'ensemble de commutation (300) et les lames (160) intégrées à l'embase support (100).

2. Système selon la revendication 1, caractérisé par le fait que les moyens de fixation complémentaires précités (142, 152, 143, 153, 144, 154; 310, 320, 330) sont adaptés pour permettre l'engagement de l'ensemble de commutation modulaire (300) sur l'embase (100) selon une direction inclinée d'un angle de l'ordre de 0 à 15°, très avantageusement de l'ordre de 3 à 5° par rapport à un plan perpendiculaire à l'axe (O-O) de la colonne de direction.

3. Système selon l'une des revendications 1 ou 2 caractérisé par le fait que les moyens de fixation complémentaires comprennent :
- des premiers moyens (142, 152; 310) conçus pour immobiliser les ensembles de commutation (300) sans jeu dans une direction parallèle à l'axe (O-O) de la colonne de direction,
- des seconds moyens (143, 153; 320) conçus pour immobiliser les ensembles de commutation (300) sans jeu dans une direction orthogonale à l'axe (O-O) de la colonne de direction, et
- des troisièmes moyens (144, 154; 330)conçus pour assurer l'immobilisation par encliquetage des ensembles de commutation (300).

4. Système selon l'une des revendications 1 à 3, caractérisé par le fait que l'embase support (100) a la forme générale d'un U pour permettre un engagement latéral sur la colonne de direction.

5. Système selon la revendication 4, caractérisé par le fait que l'embase support (100) comprend une âme (110), deux ailes (120, 130) généralement parallèles entre elles et orthogonales à l'âme (110) et deux parois (140,150) solidaires des faces externes des ailes (120, 130).

6. Système selon la revendication 5, caractérisé par le fait que l'embase support (100) comprend sur l'âme (110) et les ailes (120, 130) des moyens (124, 134, 111) adaptés pour la fixation sur la colonne de direction.

7. Système selon l'une des revendications 1 à 6, caractérisé par le fait que l'embase support (100) comprend des moyens de fixation composés d'une part de structures de guidage (124, 134) orientées perpendiculairement à l'axe de la colonne de direction et d'autre part des moyens de verrouillage (111).

8. Système selon la revendiation 7, caractérisé par le fait que les structures de guidage (124, 134) forment une rainure à bords convergents.

9. Système selon l'une des revendications 7 ou 8, caractérisé par le fait qu'il est prévu sur la colonne de direction des nervures évasées (210, 212) complémentaires de la structure de guidage (124,134) prévue sur l'embase support (110).

10. Système selon l'une des revendications 7 à 9, caractérisé par le fait que les moyens de verrouillage comprennent une lame élastique (111) à denture (112) sur l'embase support (100).

11. Système selon l'une des revendications 1 à 10, caractérisé par le fait que l'embase support comprend des moyens élastiques interdisant tout jeu par rapport à la colonne de direction, notamment radialement par rapport à l'axe de celle-ci.

12. Système selon la revendication 11, caractérisé par le fait que les moyens élastiques sont logés dans des compartiments (114) formés sur l'embase support.

13. Système selon l'une des revendications 1 à 12, caractérisé par le fait que les fils électriquement conducteurs (170) sont soudés sur la face arrière (163) des lames (162).

14. Système selon la revendication 13, caractérisé par le fait que l'embase support (100) est surmoulée sur les lames (162) et les fils (170) après soudure de ces derniers sur les lames (162).

15. Système selon la revendication 14, caractérisé par le fait que des bagues (180) sont placées sur les fils (170) avant surmoulage de l'embase (110) pour éviter toute fuite de matière plastique au niveau de ces fils lors du surmoulage.

16. Système selon l'une des revendications 1 à 15, caractérisé par le fait que l'embase support (100) possède des puits (196) en regard de pontets sécables (164) reliant initialement diverses lames (162).

17. Système selon la revendication 3, caractérisé par le fait que les premiers moyens sont formés de saillies (142, 152) en porte à faux sur un muret (141, 151).

18. Système selon la revendication 17, caractérisé par le fait que la distance séparant des structures en saillie (142, 152) d'une paroi de base (140, 150) de l'embase (100) est égale à l'épaisseur de la nervure (310) prévue sur le boîtier des ensembles de commutation (300).

19. Système selon l'une des revendications 3, 17 ou 18, caractérisé par le fait que les seconds moyens comprennent des alésages (143, 153) et pions complémentaires (320) les uns sur l'embase support (100), les autres sur les boîtiers (302) d'ensembles de commutation (300).

20. Système selon l'une des revendications 3 ou 17 à 19, caractérisé par le fait que les troisièmes moyens comprennent une languette (111) à denture (112) d'encliquetage.

21. Système selon l'une des revendications 1 à 20, caractérisé par le fait que l'embase support (100) comporte des moyens (190) de centrage d'une coquille d'habillage.

22. Système selon l'une des revendications 1 à 21, caractérisé par le fait que l'embase support (100) comporte des moyens (192) de reprise de couple de rotation autour de l'axe (O-O) de la colonne, par rapport à celle-ci.

23. Système selon l'une des revendications 1 à 22, caractérisé par le fait que les ensembles de commutation (300) sont conçus pour recevoir des modules de commutation additionnels, par engagement dans une direction générale perpendiculaire à l'axe (O-O) de la colonne.

24. Système selon l'une des revendications 1 à 23, caractérisé par le fait que l'embase (100) et/ou la partie supérieure (200) de la colonne de direction sont conçus pour recevoir des organes additionnels, tels que capteur d'angle ou contacteur tournant.

## Patentansprüche

1. Unter dem Lenkrad angebrachtes Schaltsystem für Kraftfahrzeuge des bekannten Typs, umfassend einen Sockel (100), hergestellt durch Eingießen (surmoulage) von Gruppen von Platten (160) aus elektrisch leitfähigem Material in Kunststoff und geeignet, am oberen Teil einer Lenksäule befestigt zu werden, und wenigstens eine modulare Schalteinheit (300), die an dem Sockel (100) befestigt werden kann und Schaltorgane umfaßt, die mit den in den Tragsockel (100) integrierten Platten (160) zusammenwirken können,
**dadurch gekennzeichnet,**
daß der Tragsockel (100) und die modulare Schalteinheit (300) zusätzliche Befestigungseinrichtungen (142, 152, 143, 153, 144, 154; 310, 320, 330) umfassen, geeignet das Einsetzen bzw. Einführen der modularen Schalteinheit in den Sockel (100) in einer zur Achse (O-O) der Lenksäule senkrechten Hauptrichtung und dann das Drehen der modularen Schalteinheit (300) in bezug auf den Tragsockel (100) um eine zur Achse (O-O) der Lenksäule senkrechte Achse zu ermöglichen, um die Schaltorgane der Schalteinheit (300) und die in den Tragsockel (100) integrierten Platten (160) in Kontakt bzw. Eingriff zu bringen.

2. System nach Anspruch 1, dadurch gekennzeichnet, daß die genannten zusätzlichen Befestigungseinrichtungen 142, 152, 143, 153, 144, 154; 310, 320, 330), angepaßt sind, um das Einsetzen der modularen Schalteinheit (300) in den Sockel (100) in einer um einen Winkel von 0 bis 15°, sehr vorteilhafterweise von 3 bis 5°, geneigten Richtung in bezug auf eine zur Achse (0-0) der Lenksäule senkrechten Ebene zu ermöglichen.

3. System nach einem der Ansprüche 1 oder 2, dadurch gekennzeichnet, daß die zusätzlichen Befestigungseinrichtungen umfassen:
- erste Einrichtungen (142, 152; 310), konzipiert um die Schalteinheiten (300) spielfrei in einer zur Achse (O-O) der Lenksäule parallelen Richtung zu blockieren,
- zweite Einrichtungen (143, 153; 320), konzipiert um die Schalteinheiten (300) spielfrei in einer zur Achse (O-O) der Lenksäule senkrechten Richtung zu blockieren, und
- dritte Einrichtungen (144, 154; 330), konzipiert um die Blockierung durch Verklinkung bzw. Einrastung der Schalteinheiten (300) sicherzustellen.

4. System nach einem der Ansprüche 1 bis 3, dadurch gekennzeichnet, daß der Tragsockel (100) die allgemeine Form eines U aufweist, um einen seitlichen Einsetzen bzw. Einführen auf die Lenksäule zu ermöglichen.

5. System nach Anspruch 4, dadurch gekennzeichnet, daß der Tragsockel (100) einen Kern (110), zwei im allgemeinen zueinander parallele und zum Kern senkrechte Flügel (120, 130) und zwei mit den Außenflächen der Flügel (120, 130) fest verbundene Wände (140, 150) umfaßt.

6. System nach Anspruch 5, dadurch gekennzeichnet, daß der Tragsockel (100) auf dem Kern (110) und den Flügeln (120, 130) Einrichtungen (124, 134, 111) zur Befestigung an der Lenksäule umfaßt.

7. System nach einem der Ansprüche 1 bis 6, dadurch gekennzeichnet, daß der Tragsockel (100) Befestigungseinrichtungen umfaßt, die einerseits durch Führungsstrukturen (124, 134) gebildet werden, die senkrecht zu der Achse der Lenksäule ausgerichtet sind, und andererseits durch Verriegelungseinrichtungen (111).

8. System nach Anspruch 7, dadurch gekennzeichnet, daß die Führungsstrukturen (124, 134) eine Nut bzw. Rille mit konvergenten Rändern bilden.

9. System nach einem der Ansprüche 7 oder 8, dadurch gekennzeichnet, daß auf der Lenksäule sich verbreiternde Rippen (210, 212) vorgesehen sind, komplementär zu der auf dem Tragsockel (110) vorgesehenen Führungsstruktur.

10. System nach einem der Ansprüche 7 bis 9, dadurch gekennzeichnet, daß die Verriegelungseinrichtungen eine elastische Lamelle (111) mit Zahnung (112) auf dem Tragsockel (100) umfassen.

11. System nach einem der Ansprüche 1 bis 10, dadurch gekennzeichnet, daß der Tragsockel elastische Einrichtungen umfaßt, die jedes Spiel in bezug auf die Lenksäule ausschließen, insbesondere radial in bezug auf deren Achse.

12. System nach Anspruch 11, dadurch gekennzeichnet, daß die elastischen Einrichtungen in Abteilen bzw. Nischen (114) sitzen, ausgebildet in dem Tragsockel.

13. System nach einem der Ansprüche 1 bis 12, dadurch gekennzeichnet, daß die elektrisch leitenden Drähte (170) auf der Rückseite (163) der Platten (162) festgelötet werden.

14. System nach Anspruch 13, dadurch gekennzeichnet, daß der Tragsockel (100) auf den Platten (162) und den Drähten (170) gegossen wird, nach dem Festlöten dieser letzteren auf den Platten (162).

15. System nach Anspruch 14, dadurch gekennzeichnet, daß Ringe (180) vor dem Gießen des Sockels (100) auf den Drähten (170) angebracht werden, um beim Gießen jeden Verlust von Kunststoff in Höhe dieser Drähte zu vermeiden.

16. System nach einem der Ansprüche 1 bis 15, dadurch gekennzeichnet, daß der Tragsockel (100) Bohrungen (196) aufweist gegenüber spalt- bzw. teilbaren Bügeln bzw. Stegen (pontets) (164), die anfänglich diverse Platten (162) verbinden.

17. System- nach Anspruch 3, dadurch gekennzeichnet, daß die ersten Einrichtungen durch aus einer Wand (141, 151) vorstehende Vorsprünge (142, 152) gebildet werden.

18. System nach Anspruch 17, dadurch gekennzeichnet, daß der die vorstehende Strukturen (142, 152) einer Basiswand des Sockels (100) trennende Abstand gleich der Dicke der auf dem Gehäuse der Schalteinheiten (300) vorgesehenen Rippe (310) ist.

19. System nach einem der Ansprüche 3, 17 oder 18, dadurch gekennzeichnet, daß die zweiten Einrichtungen Bohrungen (143, 153) und komplementäre Stifte (320) umfassen, die einen in dem Tragsockel (100), die anderen auf dem Gehäuse (302) der Schalteinheiten (300).

20. System nach einem der Ansprüche 3 oder 17 bis 19, dadurch gekennzeichnet, daß die dritten Einrichtungen eine Zunge (111) mit Einklink- bzw. Einrastzahnung (112) umfassen.

21. System nach einem der Ansprüche 1 bis 20, dadurch gekennzeichnet, daß der Tragsockel (100) Zentrierungseinrichtungen (190) einer Verkleidungsschale umfaßt.

22. System nach einem der Ansprüche 1 bis 21, dadurch gekennzeichnet, daß der Tragsockel (100) Einrichtungen (192) zur Aufnahme des Drehmoments um die Achse (0-0) der Lenksäule herum, in bezug auf diese, umfaßt.

23. System nach einem der Ansprüche 1 bis 22, dadurch gekennzeichnet, das die Schalteinheiten (300) konzipiert sind, um zusätzliche Schaltmodule aufzunehmen, durch Einsetzen bzw. Einführen in einer zur Achse (O-O) der Lenksäule senkrechten Hauptrichtung.

24. System nach einem der Ansprüche 1 bis 23, dadurch gekennzeichnet, daß der Sockel (100) und/oder der obere Teil (200) der Lenksäule konzipiert sind, um zusätzliche organe wie z.B. Winkelmeßgeber oder Drehverbinder aufzunehmen.

## Claims

1. A steering column mounted switch system for a motor vehicle, the switch system being of known type comprising a supporting base (100) made by overmolding a plastics material over sets of blades (160) made of an electrically conductive material, which supporting base is suitable for being fixed to the top of a steering column, and at least one modular switch assembly (300) suitable for being fixed to the base (100) and including switch means suitable for co-operating with the blades (160) integrated in the supporting base (100), said system being characterized by the fact that the supporting base (100) and the modular switch assembly (300) are provided with complementary fixing means (142, 152, 143, 153, 144, 154; 310, 320, 330) suitable for enabling the modular switch assembly (300) to be engaged on the base (100) in a general direction that is perpendicular to the axis (O-O) of the column, then enabling the modular switch assembly (300) to be pivoted relative to the supporting base (100) about an axis that is perpendicular to the axis (O-O) of the steering column so as to bring the switch members of the switch assembly (300) into engagement with the blades (160) integrated in the supporting base (100).

2. A system according to claim 1, characterized by the fact that the above-mentioned complementary fixing means (142, 152, 143, 153, 144, 154; 310, 320, 330) are suitable for enabling the modular switch assembly (300) to be engaged on the base (100) in a direction that is inclined at an angle approximately in the range 0° to 15°, and very advantageously approximately in the range 3° to 5°, relative to a plane that is perpendicular to the axis (O-O) of the steering column.

3. A system according to claim 1 or 2, characterized by the fact that the complementary fixing means comprise:
first means (142, 152; 310) designed to hold the switch assemblies (300) firmly (without backlash) in directions that are parallel to the axis (O-O) of the steering column;
second means (143, 153; 320) designed to hold the switch assemblies (300) firmly (without backlash) in directions that are orthogonal to the axis (O-O) of the steering column; and
third means (144, 154; 330) designed to hold the switch assemblies (300) by snap-fastening.

4. A system according to any one of claims 1 to 3, characterized by the fact that the supporting base (100) is generally channel section so as to enable it to be engaged laterally onto the steering column.

5. A system according to claim 4, characterized by the fact that the supporting base (100) comprises a web (110), two flanges (120, 130) generally parallel to each other and orthogonal to the web (110), and two walls integral with the outside faces of the flanges (120, 130).

6. A system according to claim 5, characterized by the fact that the supporting base (100) is provided on its web (110) and on its flanges (120, 130) with means (124, 134, 111) suitable for fixing it to the steering column.

7. A system according to any one of claims 1 to 6, characterized by the fact that the supporting base (100) is provided with fixing means composed firstly of guiding structures (124, 134) angularly positioned perpendicularly to the axis of the steering column, and secondly of locking means (111).

8. A system according to claim 7, characterized by the fact that the guiding structures (124, 134) form a groove having convergent edges.

9. A system according to claim 7 or 8, characterized by the fact that the steering column is provided with flared ribs (210, 212) that are complementary to the guiding structure (124, 134) provided on the supporting base (110).

10. A system according to any one of claims 7 to 9, characterized by the fact that the locking means comprise a resilient blade (111) having a tooth (112) on the supporting base (100).

11. A system according to any one of claims 1 to 10, characterized by the fact that the supporting base is provided with resilient means preventing any backlash relative to the steering column, in particular radially about the axis thereof.

12. A system according to claim 11, characterized by the fact that the resilient means are received in compartments (114) formed on the supporting base.

13. A system according to any one of claims 1 to 12, characterized by the fact that the electrically conductive wires (170) are soldered to the back faces (163) of the blades (162).

14. A system according to claim 13, characterized by the fact that the supporting base (100) is overmolded over the blades (162) and over the wires (170) after the wires have been soldered to the blades (162).

15. A system according to claim 14, characterized by the fact that rings (180) are placed on the wires (170) before the base (110) is overmolded so as to prevent any plastics material from leaking out along the wires during the overmolding.

16. A system according to any one of claims 1 to 15, characterized by the fact that the supporting base (100) has ducts (196) facing breakable bridges (164) that initially interconnect various blades (162).

17. A system according to claim 3, characterized by the fact that the first means are formed of cantilevered-out projections (142, 152) on a lip (141, 151).

18. A system according to claim 17, characterized by the fact that the distances between the projecting structures (142, 152) on a base wall (140, 150) of the base (100) is equal to the thickness of the ribs (310) provided on the housings of the switch assemblies (300).

19. A system according to any one of claims 3, 17, or 18, characterized by the fact that the second means comprise bores (143, 153) and complementary studs (320), respectively on the support base (100) and on the housings (302) of the switch assemblies (300), or vice versa.

20. A system according to any one of claims 3 or 17 to 19, characterized by the fact that the third means comprise a tongue (111) having a snap-fastening tooth (112).

21. A system according to any one of claims 1 to 20, characterized by the fact that the supporting base (100) is provided with means (190) for centering a trim shell.

22. A system according to any one of claims 1 to 21, characterized by the fact that the supporting base (100) is provided with means (192) for taking up the torque about the axis (O-O) of the column, relative thereto.

23. A system according to any one of claims 1 to 22, characterized by the fact that the switch assemblies (300) are designed to receive additional switch modules which can be engaged in a general direction that is perpendicular to the axis (O-O) of the column.

24. A system according to any one of claims 1 to 23, characterized by the fact that the base (100) and/or the top (200) of the steering column are designed to receive additional members, such as angle sensors or rotary contactors.
